**Europäisches Patentamt**

**European Patent Office**

**Office européen des brevets**

(19)

(11) Veröffentlichungsnummer : **0 449 082 B1**

(12)

# EUROPÄISCHE PATENTSCHRIFT

(45) Veröffentlichungstag der Patentschrift :
27.10.93 Patentblatt 93/43

(51) Int. Cl.⁵ : **F16L 21/03, E03C 1/02**

(21) Anmeldenummer : **91104210.9**

(22) Anmeldetag : **19.03.91**

(54) **Steckmuffenverbindung.**

(30) Priorität : **24.03.90 DE 4009501**

(43) Veröffentlichungstag der Anmeldung :
**02.10.91 Patentblatt 91/40**

(45) Bekanntmachung des Hinweises auf die
Patenterteilung :
**27.10.93 Patentblatt 93/43**

(84) Benannte Vertragsstaaten :
**AT BE CH DE DK ES FR GB GR IT LI LU NL SE**

(56) Entgegenhaltungen :
**FR-A- 803 405**
**FR-A- 1 327 077**
**US-A- 3 647 229**

(73) Patentinhaber : **PHOENIX
AKTIENGESELLSCHAFT
Hannoversche Strasse 88
D-21079 Hamburg (DE)**
Patentinhaber : **ALBERT STEINHOFF GmbH
D-48301 Nottuln (DE)**

(72) Erfinder : **Steinhoff jun., Albert, Dipl.-Ing.
Stiftstrasse 5
Nottuln (DE)**
Erfinder : **Grabe, Werner, Dr.-Ing.
Kiefernweg 4
W-2090 Winsen-Luhdorf (DE)**

**EP 0 449 082 B1**

Jouve, 18, rue Saint-Denis, 75001 PARIS

## Beschreibung

Die Erfindung betrifft eine Steckmuffenverbindung, insbesondere für den Einsatz im Kanalbau, bestehend aus einer Muffe aus erhärtetem Material (Beton, Stahlbeton, Kunstharz o.dgl.); einem Spitzende eines Rohres als Steckteil und einem Dichtring aus elastomerem Werkstoff, der mittels Verankerungsfüße fest mit dem Muffengrund verbunden ist (integrierte Steckmuffendichtung) und bis in den Muffenspiegel reicht, zum Abdichten des Spaltes zwischen der Muffe und dem Spitzende des angeschlossenen Rohres.

Muffenrohre, insbesondere aus Beton oder Stahlbeton, finden zur Ableitung von Abwasser und Regenwasser verbreitet Anwendung. Zur Abdichtung des Spaltes zwischen der Muffe und dem Spitzende sind Dichtringe aus elastomerem Werkstoff, d.h. aus Gummi oder gummiähnlichem Kunststoff vorgesehen, beispielsweise unter Verwendung von Roll- und Gleitringen (DE-B-12 99 183, DE-C-34 06 505, FR-A-1 327 077).

In der US-A-3 647 229 wird ein Dichtring beschrieben, der wie bei den oben erwähnten Roll- und Gleitringen nicht in der Muffe fest verankert ist. Die Gleitwirkung ist hier jedoch durch das Vorhandensein von Rillen, die sich an der Dichtungsbasisseite (Spitzendseite) befinden, stark reduziert. Der Profilkörper selbst weist vier Kanäle auf, die in zwei Reihen angeordnet und zueinander versetzt sind. Dabei befinden sich jedoch jeweils zwei Kanäle innerhalb des Profilrandbereiches, während das Zentrum des Dichtringes mit keinen Kanälen ausgestattet ist. Im Profilzentrum ist also ein breiter Versteifungssteg vorhanden, der insbesondere beim Abdichten von Muffenrohren aus Beton die Gefahr der Muffensprengung beinhaltet.

In der jüngeren Entwicklung wird es bevorzugt, den Dichtring im Muffengrund fest verankert anzuordnen (integrierte Steckmuffendichtung). Eine solche Abdichtung hat den Vorteil, daß der Dichtring bereits bei der Rohrherstellung in seine Position gebracht wird und später nur die entsprechenden Teile (Spitzende, Muffe) ineinander geschoben werden müssen. Hierzu ist es jedoch erforderlich, daß der Dichtring schon während der Rohrherstellung in eine geeignete Position fest eingebracht wird, damit während des Betonierens und beim Ausschalen eine Verlagerung nicht mehr eintreten kann.

In den meisten Fällen war hierzu bisher der Einsatz eines Hilfsringes aus Kunststoff (z.B. Styrolkunststoff) oder aus Gummi als Verschalungselement erforderlich, der zudem noch als Schutzring beim Transport und Lagerung des Muffenrohres Verwendung fand. Die Bedeutung dieses Hilfsringes bei der Herstellung eines Muffenrohres wird durch zahlreiche Publikationen untermauert, wobei die folgenden Literaturstellen lediglich eine beschränkte Auswahl des gesamten diesbezüglichen Standes der Technik wiedergeben: DE-C-21 40 546, DE-A-22 52 089, DE-C-22 66 044, DE-C-29 35 392, DE-A-31 36 183, DE-A-34 22 483, DE-C-35 07 909, DE-A-36 17 466, DE-A-36 24 831, DE-A-36 38 547, DE-A-38 08 450, DE-U-84 25 094, DE-U-90 04 616.

In der DE-C-33 45 569 wird nun eine Steckmuffendichtung beschrieben, die bei der Herstellung der Rohrmuffe ohne Einsatz eines zusätzlichen Hilfsringes einbetonierbar ist. In Einschubrichtung des Spitzendes gesehen, weist die Steckmuffendichtung in ihrem vorderen Bereich einen Dichtringteil als Hauptdichtung und daran anschließend einen an der Wandung des Muffengrundes anliegenden Kragen mit geringer Dicke auf, wobei sich der Kragen bis in den Muffenspiegel erstreckt. Innerhalb dieses Kragenbereiches der Steckmuffendichtung sind wenigstens zwei radial nach innen gerichtete, stegförmige Stützelemente (Versteifungsstege) vorgesehen, von denen eines im Bereich des Muffenspiegels angeordnet ist. Diese stegförmigen Elemente, auf deren Stirnflächen die Untermuffe aufliegt, stützen den Kragen gegen den Druck des Betons beim Einfüllen und Rütteln ab und sichern somit gegen Verformung. Bei einem derartigen Aufbau einer Steckmuffendichtung bestehen folgende Nachteile:

a) Der dünnwandige Kragen weist nur eine geringe zusätzliche Vordichtung auf.

b) Die Scherlastaufnahme im Bereich des Kragen-Stegen-Systems ist gering.

c) Die Anordnung der Versteifungsstege ist ungünstig, da beim Verpressen der Steckmuffendichtung die Stege s-bogenförmig deformiert werden und deshalb die Gefahr der Muffensprengung gegeben ist.

d) Falls das Spitzende Lunker aufweist, kann der Kragen mit Stegen nicht zu einer Erhöhung der Dichtsicherheit beitragen, da die Lunkerstelle nicht abgedeckt ist.

e) Die Endhöhe der Steckmuffendichtung am Muffenspiegel sollte möglichst klein sein, um das Biegemoment aus Rückstellkraft, die auf die Hauptdichtung wirkt, mal Hebelarm im Muffengrund aufzunehmen, um somit "Muffensprengung" zu vermeiden. Bedingt durch die besondere Profilstruktur (dünnwandiger Kragen, relativ hohe Endhöhe des Muffenspiegelsteges) ist die geforderte Aufnahme des Biegemomentes nur unzureichend gewährleistet, so daß die Gefahr der "Muffensprengung" hoch ist.

Der Erfindung liegt die Aufgabe zugrunde, einen Dichtring für eine Steckmuffenverbindung der gattungsgemäßen Art in seiner Form (Struktur) so zu verbessern, daß unter Ausschaltung der oben erwähnten Nachteile a bis e der Verzicht eines Hilfsringes während des Betonierens und beim Ausschalen möglich bzw. sinnvoll ist.

Die Aufgabe wird erfindungsgemäß dadurch gelöst, daß der Dichtring einen mehrreihigen Aufbau von Kanälen gemäß Kennzeichen des Anspruchs 1 aufweist. Bevorzugt wird dabei ein zweireihiger Aufbau mit im we-

2

sentlichen kreisförmiger Querschnittsfläche der Kanäle bei einem im wesentlichen einheitlichen Durchmesser.

Eine besonders zweckmäßige Ausführungsform der Steckmuffendichtung ist dann gegeben, wenn nur der dem Muffenspiegel zugewandte Dichtringteil A (Vordichtung) Kanäle aufweist, während der der Muffenstirnfläche zugewandte Dichtringteil B (Hauptdichtung) nicht mit Kanälen versehen ist. Durch diese Maßnahme wird eine gleichförmige Rückstellspannung hinter der Hauptdichtung erreicht. Zudem können auf diese Weise größere Toleranzen am Spitzende aufgefangen werden. Hinsichtlich des Breitenverhältnisses der beiden Dichtringteile gelten zweckmäßigerweise folgende Parameter:

$$A : B = 1,5 : 1 \text{ bis } 2 : 1$$

Das Versatzprinzip der Kanäle unter gleichzeitiger Bildung einer einheitlichen Gitterstruktur ist im unmittelbaren Bereich des Muffenspiegels nur beschränkt realisierbar, vor allem dann, wenn sich die Profilbasisfläche zum Muffenspiegel hin verjüngt.

Der in Richtung Muffenspiegel zweckmäßigerweise vorhandene Querriegel verhindert, daß sich der spiegelnahe Bereich der Steckmuffendichtung beim Entfernen der Untermuffe in radialer Richtung ablöst, zumal die Dichtung gegenüber der Muffe unter Zugspannung steht. Geometrisch ist der Querriegel so ausgebildet, daß der beim Befüllen aufsteigende Beton ihn gut umströmt, ohne daß Luftblasen hängen bleiben. Das gleiche gilt auch für die Verankerungsfüße (DE-C-35 07 909).

Zweckmäßigerweise besteht die Steckmuffendichtung aus Ethylen-Propylen-Dien-Mischpolymerisat (EPDM) oder einem Verschnitt aus Styrol-Butadien-Kautschuk (SBR) und Naturkautschuk (NR). Die Härte in Shore A beträgt insbesondere 40 bis 60°.

Die Erfindung wird nun anhand eines Ausführungsbeispiels unter Bezugnahme auf schematische Zeichnungen näher erläutert. Es zeigen:

Fig. 1    eine Rohrmuffe mit integriertem Dichtring vor der Montage (3-dimensionale Darstellung);

Fig. 2    eine Steckmuffendichtung (2-dimensionale Darstellung).

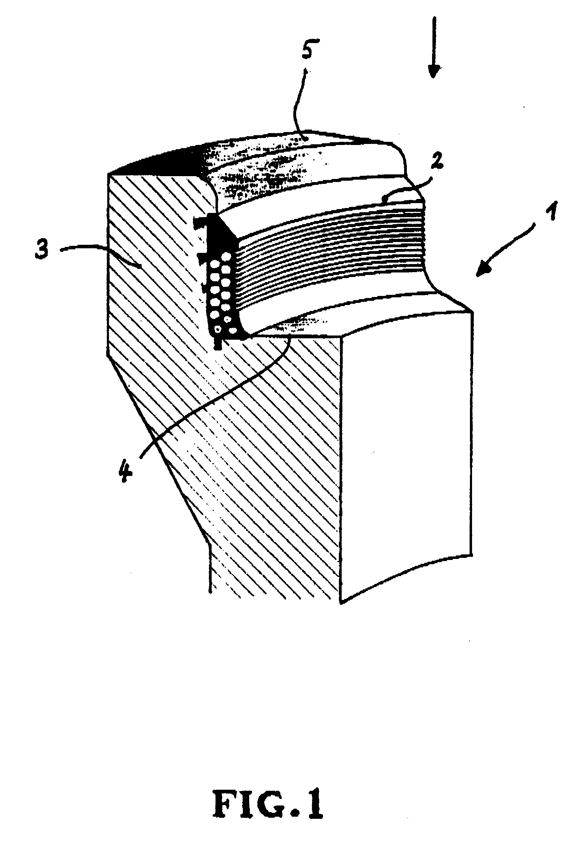

Fig. 1 zeigt eine Rohrmuffe 1 aus Beton oder Stahlbeton, wobei der Dichtring 2 in dem Muffengrund 3 verankert ist und bis in den Muffenspiegel 4 reicht. Die Steckmuffenverbindung wird nun dadurch gebildet, daß von der Muffenstirnfläche 5 her in Richtung des Pfeiles das Spitzende eines Rohres in die Muffe gesteckt wird.

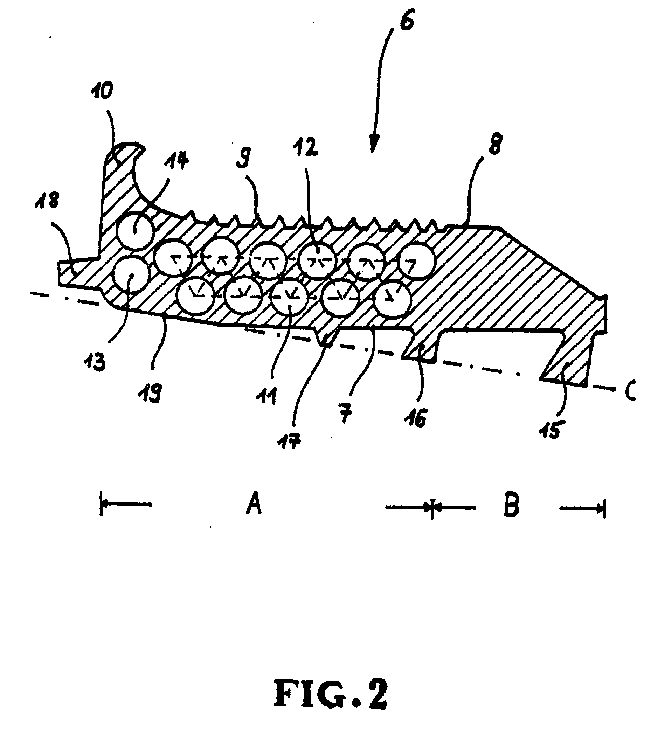

Nach Fig. 2 weist die Steckmuffendichtung 6 (eine vergrößerte Darstellung des Dichtringes 2) im wesentlichen folgende Strukturelement auf:

Profilbasisfläche 7

Profiloberfläche 8

Verzahnungen 9

Dichtlippe 10

Kanäle 11, 12, 13, 14

Verankerungsfüße 15, 16

Stütze 17

Querriegel 18

Sämtliche Kanäle, die im Querschnitt gesehen von kreisförmiger Gestalt gleichen Durchmessers sind, befinden sich innerhalb des Dichtringteils A. Dabei weist die der Profilbasisfläche 7 zugewandte Reihe fünf Kanäle 11 und die der Profiloberfläche 8 (mit Verzahnungen 9) zugewandte Reihe sechs Kanäle 12 auf, die zusammen eine Gitterstruktur (gestrichelte Linienführung) bilden. Im spiegelnahen Bereich sind zwei weitere Kanäle 13 und 14 vorhanden, die in Richtung Dichtlippe 10 etwas versetzt zu den anderen Kanälen angeordnet sind. Die Kanäle 13 und 14 selbst stehen hier nicht im Versatz zueinander. Der Dichtringteil B ist dagegen nicht mit Kanälen versehen.

Zum Muffenspiegel hin verjüngt sich die Profilbasisfläche 7, wobei dieser Bereich 19 zusammen mit den Außenflächen der Verankerungsfüße 15 und 16 sowie der Stütze 17, die aus produktionstechnischen Gründen vorhanden sein sollte, Teile einer in Bezug auf die Richtung der Rohrachse erstreckenden schiefen Ebene C sind. Der der Muffenstirnfläche 5 (Fig. 1) am nächsten liegende Verankerungsfuß 15 befindet sich innerhalb des Dichtringteils B, während der andere Verankerungsfuß 16 innerhalb des übergangsbereiches der Dichtringteile A, B angeordnet ist. Die Stütze 17 ist etwa im Zentrum der Profilbasisfläche 7 angebracht.

Hinsichtlich des zweckmäßigen Breitenverhältnisses der Dichtringteile A, B wird auf den Anspruch 7 verwiesen, wobei bei der Bildung der Gesamtbreite dieser Dichtringteile der Querriegel nicht einbezogen wird.

## Patentansprüche

1.    Steckmuffenverbindung, insbesondere für den Einsatz im Kanalbau, bestehend aus
   - einer Muffe (1) aus erhärtetem Material (Beton, Stahlbeton, Kunstharz o.dgl.);
   - einem Spitzende eines Rohres als Steckteil und

- einem Dichtring (2, 6) aus elastomerem Werkstoff, der mittels Verankerungsfüße (15, 16) fest mit dem Muffengrund (3) verbunden ist (integrierte Steckmuffendichtung) und bis in den Muffenspiegel (4) reicht, zum Abdichten des Spaltes zwischen der Muffe und dem Spitzende des angeschlossenen Rohres;
dadurch gekennzeichnet, daß
    - der Dichtring (2, 6) einen mehrreihigen Aufbau von kreisförmig umlaufenden Kanälen (11, 12, 13, 14) aufweist, wobei nahezu sämtliche Kanäle - von Reihe zu Reihe betrachtet - versetzt zueinander angeordnet sind, und zwar - im axialen Querschnitt betrachtet - unter Bildung einer einheitlichen Gitterstruktur, wobei ferner die Anzahl der Kanäle in jeder - im wesentlichen in Richtung der Achse ausgerichteten - Reihe $\geqq$ 3, insbesondere $\geqq$ 5, ist.

2. Steckmuffenverbindung nach Anspruch 1, dadurch gekennzeichnet, daß die Kanäle des Dichtringes (2, 6) einen zweireihigen Aufbau aufweisen.

3. Steckmuffenverbindung nach Anspruch 1 oder 2, dadurch gekennzeichnet, daß die Kanäle des Dichtringes (2, 6) eine im wesentlichen kreisförmige Querschnittsfläche besitzen.

4. Steckmuffenverbindung nach Anspruch 3, dadurch gekennzeichnet, daß der Durchmesser der Kanäle im wesentlichen gleich groß ist.

5. Steckmuffenverbindung nach einem der Ansprüche 1 bis 4, dadurch gekennzeichnet, daß nur der dem Muffenspiegel (4) zugewandte Dichtringteil (A) Kanäle (11, 12, 13, 14) aufweist, während der der Muffenstirnfläche (5) zugewandte Dichtringteil (B) nicht mit Kanälen versehen ist.

6. Steckmuffenverbindung nach Anspruch 5, dadurch gekennzeichnet, daß hinsichtlich des Breitenverhältnisses der beiden Dichtringteile (A, B) folgende Parameter gelten:
$$A : B = 1,5 : 1 \text{ bis } 2 : 1$$

7. Steckmuffenverbindung nach Anspruch 5 oder 6, dadurch gekennzeichnet, daß innerhalb des übergangsbereiches der beiden Dichtringteile (A, B) ein Verankerungsfuß (16) angeordnet ist.

8. Steckmuffenverbindung nach einem der Ansprüche 1 bis 7, dadurch gekennzeichnet, daß der Dichtring (2, 6) im Bereich des Muffenspiegels (4) eine Dichtlippe (10) aufweist.

9. Steckmuffenverbindung nach einem der Ansprüche 1 bis 8, dadurch gekennzeichnet, daß sich die Profilbasisfläche (7) des Dichtringes (6) zum Muffenspiegel (4) hin verjüngt (Bereich 19).

10. Steckmuffenverbindung nach einem der Ansprüche 1 bis 9, dadurch gekennzeichnet, daß der Dichtring (2, 6) in Richtung Muffenspiegel (4) einen Querriegel (18) aufweist.

11. Steckmuffenverbindung nach einem der Ansprüche 1 bis 10, dadurch gekennzeichnet, daß etwa im Zentrum der Profilbasisfläche (7) des Dichtringes (2, 6) eine Stütze (17) angeordnet ist.

12. Steckmuffenverbindung nach einem der Ansprüche 2 bis 11, insbesondere in Verbindung mit den Ansprüchen 5 bis 9, dadurch gekennzeichnet, daß die der Profilbasisfläche (7) zugewandte Reihe des Dichtringes (6) fünf Kanäle (11) und die der Profiloberfläche (8) zugewandte Reihe sechs Kanäle (12) aufweist, wobei zum Muffenspiegel (4) hin zwei weitere Kanäle (13, 14) vorhanden sind, die in Richtung Dichtlippe (10) etwas versetzt zu den anderen Kanälen (11, 12) angeordnet sind und nicht im Versatz zueinander stehen.

13. Steckmuffenverbindung nach einem der Ansprüche 1 bis 12, insbesondere in Verbindung mit den Ansprüchen 7, 9 und 11, dadurch gekennzeichnet, daß die Außenflächen der Verankerungsfüße (15, 16) und der Stütze (17) sowie die sich im Bereich (19) verjüngende Profilbasisfläche des Dichtringes (6) Teile einer in Bezug auf die Richtung der Rohrachse erstreckenden schiefen Ebene (C) sind.

14. Steckmuffenverbindung nach einem der Ansprüche 1 bis 13, dadurch gekennzeichnet, daß der Dichtring (2, 6) an seiner Profiloberfläche (8) Verzahnungen (9) aufweist.

15. Steckmuffenverbindung nach einem der Ansprüche 1 bis 14, dadurch gekennzeichnet, daß der Dichtring (2, 6) aus Ethylen-Propylen-Dien-Mischpolymerisat (EPDM) oder einem Verschnitt aus Styrol-Butadien-Kautschuk (SBR) und Naturkautschuk (NR) besteht.

16. Steckmuffenverbindung nach einem der Ansprüche 1 bis 15, dadurch gekennzeichnet, daß der Dichtring (2, 6) eine Härte in Shore A von 40 bis 60° aufweist.

**Claims**

1. A spigot and socket joint, in particular for use in channel construction, comprising
   - a socket (1) composed of hardened material (concrete, steel concrete, synthetic resin or the like);
   - a spigot end of a pipe as plug-in component and
   - a sealing ring (2, 6) composed of elastomeric material which is permanently connected to the base (3) of the socket by means of anchoring feet (15, 16) (integrated spigot and socket seal) and extends into the surface (4) of the socket, for sealing the gap between the socket and the spigot end of the attached pipe;
   characterised in that the sealing ring (2, 6) comprises a multi-row structure of circular channels (11, 12, 13, 14) wherein virtually all the channels - considered from row to row - are arranged offset relative to one another thereby forming a uniform grid structure considered in an axial cross-section, and wherein moreover the number of channels of each row, aligned substantially in the axial direction, $\geqq 3$, in particular $\geqq 5$.

2. A spigot and socket joint as claimed in Claim 1, characterised in that the channels of the sealing ring (2, 6) comprise a two-row structure.

3. A spigot and socket joint as claimed in Claims 1 or 2, characterised in that the channels of the sealing ring (2, 6) have a substantially circular cross-sectional surface area.

4. A spigot and socket joint as claimed in Claim 3, characterised in that the diameter of the channels is substantially equal.

5. A spigot and socket joint as claimed in one of Claims 1 to 4, characterised in that only the sealing ring component (A) facing towards the surface (4) of the socket comprises channels (11, 12, 13, 14), whilst the sealing ring component (B) facing towards the end face (5) of the socket does not comprise channels.

6. A spigot and socket joint as claimed in Claim 5, characterised in that the width ratio of the two sealing ring components (A, B) is governed by the following parameters:
$$A : B = 1.5 : 1 \text{ to } 2 : 1.$$

7. A spigot and socket joint as claimed in Claim 5 or 6, characterised in that an anchoring foot (16) is arranged inside the junction zone between the two sealing ring components (A, B).

8. A spigot and socket joint as claimed in one of Claims 1 to 7, characterised in that the sealing ring (2, 6) has a sealing lip (10) in the region of the surface (4) of the socket.

9. A spigot and socket joint as claimed in one of Claims 1 to 8, characterised in that the profile base surface (7) of the sealing ring (6) tapers towards the surface (4) of the socket (zone 19).

10. A spigot and socket joint as claimed in one of Claims 1 to 9, characterised in that the sealing ring (2, 6) comprises a cross-bar (18) in the direction of the surface (4) of the socket.

11. A spigot and socket joint as claimed in one of Claims 1 to 10, characterised in that a support (17) is arranged approximately in the centre of the profile base surface (7) of the sealing ring (2, 6).

12. A spigot and socket joint as claimed in one of Claims 2 to 11, in particular in association with Claims 5 to 9, characterised in that the row of the sealing ring (6) facing towards the profile base surface (7) comprises five channels (11) and the row facing towards the profile upper surface (8) comprises six channels (12), where two further channels (13, 14) are provided in the direction of the surface (4) of the socket, which two further channels (13, 14), in the direction of the sealing lip (10), are arranged somewhat offset in relation to the other channels (11, 12) and are not offset relative to one another.

13. A spigot and socket joint as claimed in one of Claims 1 to 12, in particular in association with Claims 7, 9 and 11, characterised in that the outer surfaces of the anchoring feet (15, 16) and of the support (17), and the profile base surface of the sealing ring (6), which tapers in the zone (19), form parts of a plane (C) inclined relative to the direction of the pipe axis.

14. A spigot and socket joint as claimed in one of Claims 1 to 13, characterised in that the sealing ring (2, 6) is provided with teeth (9) on its profile upper surface (8).

15. A spigot and socket joint as claimed in one of Claims 1 to 14, characterised in that the sealing ring (2, 6) is composed of ethylene-propylene-diene-copolymerisate (EPDM) or a blend of styrene-butadiene-rubber (SBR) and natural rubber (NR).

16. A spigot and socket joint as claimed in one of Claims 1 to 15, characterised in that the sealing ring (2, 6) has a Shore A hardness of 40 to 60°.

## Revendications

1. Raccord par manchon d'emboîtement, utilisable en particulier dans la construction de conduites d'égout, se composant
   - d'un manchon (1) en matériau durci (béton, béton armé, résine synthétique ou similaires);
   - d'une petite extrémité d'un tuyau en tant qu'élément emboîté; et
   - d'un anneau d'étanchéité (2, 6) en matière élastomère, qui est fixé rigidement au fond (3) du manchon au moyen de pieds d'ancrage (15, 16) (garniture d'étanchéité intégrée de manchon d'emboîtement) et qui s'étend jusqu'à l'épaulement (4) du manchon, pour rendre étanche la fente entre le manchon et la petite extrémité du tuyau raccordé;
   caractérisé en ce que
   - l'anneau d'étanchéité (2, 6) présente une structure en plusieurs rangées de canaux circonférentiels circulaires (11, 12, 13, 14), la quasi totalité des canaux - considérés d'une rangée à l'autre - étant mutuellement décalés, et cela en formant - en les considérant en coupe axiale - une structure réticulaire uniforme, le nombre des canaux dans chaque rangée - orientée essentiellement en direction de l'axe - étant en outre $\geqq 3$, en particulier $\geqq 5$.

2. Raccord par manchon d'emboîtement selon la revendication 1, caractérisé en ce que les canaux de l'anneau d'étanchéité (2, 6) présentent une structure en deux rangées.

3. Raccord par manchon d'emboîtement selon la revendication 1 ou 2, caractérisé en ce que les canaux de l'anneau d'étanchéité (2, 6) ont une surface essentiellement circulaire en coupe transversale.

4. Raccord par manchon d'emboîtement selon la revendication 3, caractérisé en ce que les diamètres des canaux sont essentiellement égaux.

5. Raccord par manchon d'emboîtement selon l'une quelconque des revendications 1 à 4, caractérisé en ce que seule la partie <A) de l'anneau d'étanchéité qui est du côté de l'épaulement (4) du manchon présente des canaux (11, 12, 13, 14), tandis que la partie (B) de l'anneau d'étanchéité qui est du côté de la surface d'extrémité (5) du manchon n'est pas munie de canaux.

6. Raccord par manchon d'emboîtement selon la revendication 5, caractérisé en ce que les paramètres suivants s'appliquent en ce qui concerne le rapport de largeur des deux parties (A, B) de l'anneau d'étanchéité:

$$A : B = 1,5 : 1 \text{ à } 2 : 1$$

7. Raccord par manchon d'emboîtement selon la revendication 5 ou 6, caractérisé en ce qu'un pied d'ancrage (16) est disposé dans les limites de la zone de transition des deux parties (A, B) de l'anneau d'étanchéité.

8. Raccord par manchon d'emboîtement selon l'une quelconque des revendications 1 à 7, caractérisé en ce que l'anneau d'étanchéité (2, 6) présente une lèvre d'étanchéité (10) au niveau de l'épaulement (4) du manchon.

9. Raccord par manchon d'emboîtement selon l'une quelconque des revendications 1 à 8, caractérisé en ce que la surface de base profilée (7) de l'anneau d'étanchéité (6) est en dépouille en direction de l'épaulement (4) du manchon (région 19).

10. Raccord par manchon d'emboîtement selon l'une quelconque des revendications 1 à 9, caractérisé en ce que l'anneau d'étanchéité (2, 6) présente une semelle de base (18) en direction de l'épaulement (4) du manchon.

11. Raccord par manchon d'emboîtement selon l'une quelconque des revendications 1 à 10, caractérisé en ce qu'un appui (17) est disposé à peu près au milieu de la surface de base profilée (7) de l'anneau d'étanchéité (2, 6).

12. Raccord par manchon d'emboîtement selon l'une quelconque des revendications 2 à 11, en particulier en liaison avec les revendications 5 à 9, caractérisé en ce que la rangée de canaux de l'anneau d'étanchéité (6) du côté de la surface de base profilée (7) comprend cinq canaux (11) et la rangée du côté de la superficie profilée (8) comprend six canaux (12), deux canaux supplémentaires (13, 14) étant présents vers l'épaulement (4) du manchon, ces canaux étant un peu décalés en direction de la lèvre d'étanchéité (10) par rapport aux autres canaux (11, 12) et n'étant pas décalés l'un par rapport à l'autre.

13. Raccord par manchon d'emboîtement selon l'une quelconque des revendications 1 à 12, en particulier en liaison avec les revendications 7, 9 et 11, caractérisé en ce que les surfaces externes des pieds d'ancrage (15, 16) et de l'appui (17), ainsi que la surface de base profilée de l'anneau d'étanchéité (6), dans la région en dépouille (19), font partie d'un plan oblique (C) par rapport à la direction de l'axe du tuyau.

14. Raccord par manchon d'emboîtement selon l'une quelconque des revendications 1 à 13, caractérisé en ce que l'anneau d'étanchéité (2, 6) présente une denture (9) sur sa superficie profilée (8).

15. Raccord par manchon d'emboîtement selon l'une quelconque des revendications 1 à 14, caractérisé en ce que l'anneau d'étanchéité (2, 6) est composé d'un copolymère éthylène/propylène/diène (EPDM) ou d'un mélange de caoutchouc au styrène/butadiène (SBR) et de caoutchouc naturel (NR).

16. Raccord par manchon d'emboîtement selon l'une quelconque des revendications 1 à 15, caractérisé en ce que l'anneau d'étanchéité (2, 6) présente une dureté Shore A de 40 à 60°.

**FIG.1**

# FIG.2